# EUROPÄISCHE PATENTSCHRIFT

(11) **EP 3 005 317 B1**
(45) Veröffentlichungstag und Bekanntmachung des Hinweises auf die Patenterteilung: **11.03.2026**
(21) Anmeldenummer: 14727201.7
(22) Anmeldetag: 28.05.2014
(51) Int. Cl.: G07C 9/00

(54) **VERFAHREN ZUM DEAKTIVIEREN EINER SICHERHEITSANLAGE**
METHOD FOR DEACTIVATING A SECURITY SYSTEM
PROCÉDÉ DE DÉSACTIVATION D'UNE INSTALLATION DE SÉCURITÉ

(30) Priorität: 04.06.2013 DE 102013105727
(43) Veröffentlichungstag der Anmeldung: 13.04.2016
(73) Patentinhaber: Bundesdruckerei GmbH, 10969 Berlin (DE)
(72) Erfinder: MORGNER, Frank, 15537 Grünheide (DE); TRÖLENBERG, Stefan, 15749 Mittenwalde OT Ragow (DE); SCHRÖDER, Martin, 12559 Berlin (DE)
(74) Vertreter: Patentship Patentanwaltsgesellschaft mbH
(86) Internationale Anmeldenummer: PCT/EP2014/061013
(87) Internationale Veröffentlichungsnummer: WO 2014/195194

(56) Entgegenhaltungen:
- EP-A1- 1 031 918
- WO-A1-01/39133
- WO-A1-2011/101486
- DE-A1- 19 810 817
- US-A1- 2007 186 106
- ANDREAS POLLER ET AL: "Electronic Identity Cards for User Authentication Promise and Practice", SECURITY & PRIVACY, IEEE, IEEE SERVICE CENTER, LOS ALAMITOS, CA, US, vol. 10, no. 1, 1 January 2012 (2012-01-01), pages 46 - 54, XP011403304, ISSN: 1540-7993, DOI: 10.1109/MSP.2011.148
- "Technical Guideline BSI Requirements for Smart Card Readers Supporting eID and eSign Based on Extended Access Control", 22 March 2013 (2013-03-22), XP055201694, Retrieved from the Internet <URL:https://www.bsi.bund.de/SharedDocs/Downloads/EN/BSI/Publications/TechGuidelines/TR03119/BSI-TR-03119_V1_pdf.pdf;jsessionid=79CD8160ADF463A8659D2C22B25A88B1.2_cid359?__blob=publicationFile> [retrieved on 20150710]
- "Technische Richtlinie eID-Server", 6 December 2011, BUNDESAMT F?R SICHERHEIT IN DER INFORMATIONSTECHNIK, Bonn, Germany, article "Technische Richtlinie eID-Server", pages: 1 - 101, XP055059662
- "Architektur elektronischer Personalausweis und elektroni-scher Aufenthaltstitel", 27 May 2011 (2011-05-27), Bonn, Germany, XP055059591, Retrieved from the Internet <URL:https://www.bsi.bund.de/DE/Publikationen/TechnischeRichtlinien/tr03127/tr-03127.html> [retrieved on 20130415]
- ANONYMOUS: "BSI TR-03110 Advanced Security Mechanisms for Machine Readable Travel Documents", 20 March 2012 (2012-03-20), XP055029789, Retrieved from the Internet <URL:https://www.bsi.bund.de/ContentBSI/Publikationen/TechnischeRichtlinien/tr03110/index_htm.html> [retrieved on 20120613]

## Beschreibung

Die vorliegende Erfindung betrifft das Gebiet des Deaktivierens einer Sicherheitsanlage.

Die Offenlegungsschrift DE 198 10 817 A1 zeigt ein System zur Prüfung der Zugangsberechtigung.

Die Offenlegungsschrift WO 01/39133 A1 zeigt ein System und ein Verfahren zur automatisierten Kontrolle des Passierens einer Grenze.

Die Offenlegungsschrift US 2007/1816016 A1 offenbart ein System und ein Verfahren für eine multifaktorielle Authentifikation.

Die Druckschrift "ANDREAS POLLER ET AL: "Electronic Identity Cards for User Authentication Promise and Practice", SECURITY & PRIVACY, IEEE, IEEE SERVICE CENTER, LOS ALAMITOS, CA, US, Bd. 10, Nr. 1, 1. January 2012 (2012-01-01), Seiten 46-54, XP011403304, ISSN: 1540-7993, DOI: 10.1109/MSP.2011.148" beschäftigt sich mit Anwendungen von elektronischen Identifikationsdokumenten.

Die Druckschrift "Technical Guideline BSI Requirements for Smart Card Readers Supporting elD and eSign Based on Extended Access Control", 22. März 2013 (2013-03-22), XP055201694" ist eine technische Richtlinie, die sich mit der Verwendung von elektronischen Identifikationsdokumenten beschäftigt.

Die Druckschrift "Technische Richtlinie eID-Server" In: "Technische Richtlinie eiD-Server", 6. Dezember 2011 (2011-12-06), Bundesamt für Sicherheit in der Informationstechnik, Bonn, Germany, XP055059662, Seiten 1-101" ist eine technische Richtlinie, die auf einen Betrieb von elD-Servern gerichtet ist.

Die Druckschrift "Architektur elektronischer Personalausweis und elektronischer Aufenthaltstitel", 27. Mai 2011 (2011-05-27), XP055059591, Bonn, Germany" ist eine technische Richtlinie, die auf die Architektur elektronischer Personalausweise und elektronischer Aufenthaltstitel gerichtet ist.

Die Druckschrift "Anonymous: "BSI TR-03110 Advanced Security Mechanisms for Machine Readable Travel Documents", 20. März 2012 (2012-03-20), XP055029789" ist eine technische Richtlinie, die sich mit Sicherheitsmechanismen für maschinenlesbare Reisedokumente beschäftigt.

Die Offenlegungsschrift WO 2011/101486 A1 (EASY AXESS GMBH I G [DE]; KIM TIMOTHEUS [AT]) 25. August 2011 (2011-08-25) offenbart ein System und ein Verfahren zum elektronischen Bereitstellen einer Zutrittsberechtigung.

Die Druckschrift EP 1 031 918 A1 betrifft eine Schließvorrichtung, insbesondere eine elektronisch gesteuerte Schließvorrichtung für Türen mit Blockschlossfunktion.

Sicherheitsanlagen, beispielsweise Alarmanlagen oder Verriegelungsanlagen, haben sowohl im privaten als auch im gewerblichen Umfeld eine hohe Verbreitung gefunden. Diese Anlagen sind beispielsweise dafür vorgesehen, einen Zutritt zu einem Gebäude oder zu einem beschränkten Bereich eines Gebäudes ausschließlich einem eingeschränkten und vordefinierten Personenkreis zu ermöglichen.

Zum Deaktivieren der Sicherheitsanlage wird üblicherweise eine Authentifizierung einer jeweiligen Person durchgeführt und bei erfolgreicher Zuordnung der Person zu dem eingeschränkten und vordefinierten Personenkreis die Sicherheitsanlage deaktiviert. Die Authentifizierung der jeweiligen Person kann beispielsweise mittels einer Eingabe einer persönlichen Identifikationsnummer in ein Terminal oder eines Auslesens einer elektronischen Signatur aus einer Signaturkarte bzw. Smartcard erfolgen.

Sowohl die persönliche Identifikationsnummer als auch die elektronische Signatur sind dabei üblicherweise speziell der jeweiligen Sicherheitsanlage zugeordnet und können nicht für weitere Sicherheitsanlagen und/oder Anwendungen verwendet werden. Die Einrichtung und Verwaltung einer Berechtigung zum Deaktivieren der Sicherheitsanlage, beispielsweise durch Zuteilung einer persönlichen Identifikationsnummer oder einer elektronischen Signatur, erweist sich zudem häufig als aufwändig und kostenintensiv.

Es ist daher die Aufgabe der vorliegenden Erfindung, ein effizientes und kostengünstiges Konzept zum Deaktivieren einer Sicherheitsanlage zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch die Verwendung eines elektronisch auslesbaren Identifikationsdokumentes gelöst werden kann.

Gemäß einem ersten Aspekt betrifft die Erfindung ein Verfahren zum Deaktivieren einer Sicherheitsanlage gemäß Anspruch 1 unter Verwendung eines elektronisch auslesbaren Identifikationsdokumentes. Dadurch wird der Vorteil erreicht, dass das Deaktivieren der Sicherheitsanlage effizient durchgeführt werden kann.

Die Sicherheitsanlage umfasst eine Alarmanlage. Die Sicherheitsanlage ist dafür vorgesehen, einen Zutritt zu einem Gebäude oder zu einem beschränkten Bereich eines Gebäudes zu ermöglichen oder zu verwehren. Die Sicherheitsanlage kann mit weiteren Anlagen, beispielsweise Anlagen zur Zeiterfassung, verbunden werden.

Das Identifikationsdokument kann beispielsweise eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die elektronische Identifikation kann beispielsweise durch eine Folge von Buchstaben, Ziffern, Bytes und/oder Symbolen gebildet sein. Die elektronische Identifikation kann beispielsweise eine persönliche Angabe über eine Person, beispielsweise einen Namen, und/oder eine Kennung des Identifikationsdokumentes, beispielsweise eine Seriennummer, umfassen. Die elektronische Identifikation kann ferner durch das Identifikationsdokument erzeugt und/oder gespeichert werden.

Das Auslesen der elektronischen Identifikation aus dem Identifikationsdokument kann den Austausch und/oder die Übertragung von kryptographischen Schlüsseln und/oder kryptographischen Zertifikaten umfassen. Ferner kann das Auslesen der elektronischen Identifikation eine Verifikation der Echtheit des Identifikationsdokumentes und/oder der elektronischen Identifikation umfassen. Das Auslesen der elektronischen Identifikation kann beispielsweise mittels eines Lesegerätes, beispielsweise eines Kartenlesers mit einer Möglichkeit zur PIN-Eingabe, insbesondere eines Komfortlesegerätes, durchgeführt werden. Das Auslesen der elektronischen Identifikation kann drahtlos und/oder drahtgebunden erfolgen.

Das Vergleichen der ausgelesenen elektronischen Identifikation mit einer vorgespeicherten elektronischen Identifikation kann den Abgleich der ausgelesenen elektronischen Identifikation mit einem Speicher und/oder einer Datenbank umfassen, welche eine Mehrzahl vorgespeicherter elektronischer Identifikationen umfasst.

Die Übereinstimmung zwischen der ausgelesenen elektronischen Identifikation und der vorgespeicherten elektronischen Identifikation kann beispielsweise dann erfüllt sein, wenn die ausgelesene elektronische Identifikation und die vorgespeicherte elektronische Identifikation identisch sind.

Das Deaktivieren der Sicherheitsanlage kann beispielsweise ein Abschalten oder ein Entschärfen der Sicherheitsanlage umfassen.

Die Sicherheitsanlage umfasst eine Alarmanlage, wobei das Deaktivieren der Sicherheitsanlage ein Deaktivieren der Alarmanlage umfasst. Dadurch wird der Vorteil erreicht, dass technisch ausgereifte Sicherheitsanlagen verwendet werden können.

Die Alarmanlage kann einen unbefugten Zutritt zu einem Gebäude oder zu einem beschränkten Bereich eines Gebäudes anzeigen. Die Alarmanlage kann hierfür beispielsweise akustische Signale und/oder elektrische Signale aussenden.

Das Deaktivieren der Alarmanlage kann beispielsweise ein Entschärfen der Alarmanlage umfassen.

Die elektronische Identifikation ist die Restricted Identification des Identifikationsdokumentes. Dadurch wird der Vorteil erreicht, dass eine pseudonyme elektronische Identifikation des Identifikationsdokumentes eingesetzt werden kann.

Die Restricted Identification kann beispielsweise auf Grundlage eines Diffie-Hellman-Verfahrens und/oder eines Diffie-Hellman-Schlüsselaustausches durch das Identifikationsdokument erzeugt werden. Die Restricted Identification kann beispielsweise durch Verknüpfen kryptographischer Schlüssel durch das Identifikationsdokument erzeugt werden.

Die Restricted Identification ergibt sich aus einer kryptographischen Verknüpfung zwischen einem privaten kryptographischen Schlüssel des Identifikationsdokumentes und eines öffentlichen kryptographischen Schlüssels des Authentifizierungsservers bzw. einem auf dieser Basis gebildeten Hashwert, ggf. unter Hinzuziehung eines weiteren kryptographischen Schlüssels.

Gemäß einer Ausführungsform umfasst die elektronische Identifikation zumindest ein Personendatum, insbesondere einen Namen oder eine Adresse, einer durch das elektronisch auslesbare Identifikationsdokument identifizierten Person.

Das Auslesen der elektronischen Identifikation aus dem Identifikationsdokument umfasst die folgenden Schritte: Übertragen einer Deaktivierungsanfrage zur Deaktivierung der Sicherheitsanlage zu einem Authentifizierungsserver; Ansprechend auf den Empfang der Deaktivierungsanfrage, Übertragen einer Authentifizierungsanfrage von dem Authentifizierungsserver zu einem Identifizierungsserver; Ansprechend auf den Empfang der Authentifizierungsanfrage, Auslesen der elektronischen Identifikation aus dem Identifikationsdokument durch den Identifizierungsserver; und Übertragen der elektronischen Identifikation von dem Identifizierungsserver zu dem Authentifizierungsserver. Dadurch wird der Vorteil erreicht, dass das Auslesen der elektronischen Identifikation aus dem Identifikationsdokument durch den Identifizierungsserver unabhängig von der Funktionalität des Authentifizierungsservers und der Funktionalität der Sicherheitsanlage durchgeführt werden kann.

Der Authentifizierungsserver kann ausgebildet sein, die Authentifizierungsanfrage zu erzeugen und an den Identifizierungsserver auszusenden. Der Authentifizierungsserver kann ferner ausgebildet sein, die ausgelesene und übertragene elektronische Identifikation mit einer vorgespeicherten elektronischen Identifikation zu vergleichen. Der Authentifizierungsserver kann ferner für eine Verwaltung einer Mehrzahl vorgespeicherter elektronischer Identifikationen unterschiedlicher Identifikationsdokumente ausgebildet sein.

Der Identifizierungsserver ist ausgebildet, die elektronische Identifikation aus dem Identifikationsdokument auszulesen und an den Authentifizierungsserver zu übertragen. Der Identifizierungsserver kann ferner ausgebildet sein, die Echtheit des Identifikationsdokumentes zu verifizieren. Der Identifizierungsserver ist ein elD-Server bzw. ein elektronischer Identifizierungsserver gemäß der Richtlinie BSI TR-03130.

Die Deaktivierungsanfrage kann durch eine elektronische Nachricht, einen Befehl, ein Kommando und/oder einen Prozess gebildet sein. Die Deaktivierungsanfrage kann beispielsweise durch einen Computer, ein Terminal und/oder ein Lesegerät für Identifikationsdokumente erzeugt und übertragen werden.

Die Authentifizierungsanfrage kann durch eine elektronische Nachricht, einen Befehl, ein Kommando und/oder einen Prozess gebildet sein. Die Authentifizierungsanfrage kann beispielsweise durch den Authentifizierungsserver erzeugt und übertragen werden.

Das Übertragen der Deaktivierungsanfrage zu dem Authentifizierungsserver kann ein Aussenden der Deaktivierungsanfrage sowie ein Empfangen der Deaktivierungsanfrage umfassen. Das Übertragen der Deaktivierungsanfrage zu dem Authentifizierungsserver wird über ein Kommunikationsnetzwerk durchgeführt. Das Übertragen der Deaktivierungsanfrage kann ferner einen Aufbau sowie ein Schließen einer verschlüsselten und/oder authentisierten Kommunikationsverbindung umfassen.

Das Übertragen der Authentifizierungsanfrage von dem Authentifizierungsserver zu dem Identifizierungsserver kann ein Aussenden der Authentifizierungsanfrage sowie ein Empfangen der Authentifizierungsanfrage umfassen. Das Übertragen der Authentifizierungsanfrage von dem Authentifizierungsserver zu dem Identifizierungsserver wird über ein Kommunikationsnetzwerk durchgeführt. Das Übertragen der Authentifizierungsanfrage kann ferner einen Aufbau sowie ein Schließen einer verschlüsselten und/oder authentisierten Kommunikationsverbindung umfassen.

Das Auslesen der elektronischen Identifikation aus dem Identifikationsdokument durch den Identifizierungsserver kann den Austausch und/oder die Übertragung von kryptographischen Schlüsseln und/oder kryptographischen Zertifikaten umfassen. Ferner kann das Auslesen der elektronischen Identifikation eine Verifikation der Echtheit des Identifikationsdokumentes und/oder der elektronischen Identifikation umfassen.

Das Übertragen der elektronischen Identifikation von dem Identifizierungsserver zu dem Authentifizierungsserver kann ein Aussenden der elektronischen Identifikation sowie ein Empfangen der elektronischen Identifikation umfassen. Das Übertragen der elektronischen Identifikation von dem Identifizierungsserver zu dem Authentifizierungsserver wird über ein Kommunikationsnetzwerk durchgeführt. Das Übertragen der elektronischen Identifikation kann ferner einen Aufbau sowie ein Schließen einer verschlüsselten und/oder authentisierten Kommunikationsverbindung umfassen.

Gemäß einer Ausführungsform umfasst das Verfahren: Übertragen des öffentlichen kryptographischen Schlüssels des Authentifizierungsservers zu dem Identifizierungsserver oder Auslesen des öffentlichen kryptographischen Schlüssels des Authentifizierungsservers aus einem Speicher des Identifizierungsservers; und Übertragen des öffentlichen kryptographischen Schlüssels des Authentifizierungsservers von dem Identifizierungsserver zu dem Identifikationsdokument. Dadurch wird der Vorteil erreicht, dass der öffentliche kryptographische Schlüssel des Authentifizierungsservers durch das Identifikationsdokument verarbeitet und/oder ausgewertet werden kann.

Der öffentliche kryptographische Schlüssel des Authentifizierungsservers kann Teil eines kryptographischen Schlüsselpaares sein und gemäß einer Public-Key-Infrastruktur erzeugt worden sein.

Der Speicher des Identifizierungsservers kann beispielsweise durch eine elektronische Speicherbaugruppe oder eine Datenbank realisiert sein. Der Speicher des Identifizierungsservers kann ausgebildet sein, eine Mehrzahl unterschiedlicher öffentlicher kryptographischer Schlüssel einer Mehrzahl unterschiedlicher Authentifizierungsserver zu speichern.

Das Übertragen des öffentlichen kryptographischen Schlüssels des Authentifizierungsservers zu dem Identifizierungsserver kann ein Aussenden des öffentlichen kryptographischen Schlüssels des Authentifizierungsservers sowie ein Empfangen des öffentlichen kryptographischen Schlüssels des Authentifizierungsservers umfassen. Das Übertragen des öffentlichen kryptographischen Schlüssels des Authentifizierungsservers zu dem Identifizierungsserver kann beispielsweise über ein Kommunikationsnetzwerk durchgeführt werden. Das Übertragen des öffentlichen kryptographischen Schlüssels des Authentifizierungsservers kann ferner einen Aufbau sowie ein Schließen einer verschlüsselten und/oder authentisierten Kommunikationsverbindung umfassen.

Das Auslesen des öffentlichen kryptographischen Schlüssels des Authentifizierungsservers aus dem Speicher des Identifizierungsservers kann einen Zugriff auf den Speicher des Identifizierungsservers umfassen. Das Auslesen des öffentlichen kryptographischen Schlüssels des Authentifizierungsservers aus dem Speicher des Identifizierungsservers kann ferner eine Suche in dem Speicher sowie eine Extraktion des öffentlichen kryptographischen Schlüssels des Authentifizierungsservers aus dem Speicher umfassen.

Das Übertragen des öffentlichen kryptographischen Schlüssels des Authentifizierungsservers von dem Identifizierungsserver zu dem Identifikationsdokument kann ein Aussenden des öffentlichen kryptographischen Schlüssels des Authentifizierungsservers sowie ein Empfangen des öffentlichen kryptographischen Schlüssels des Authentifizierungsservers umfassen. Das Übertragen des öffentlichen kryptographischen Schlüssels des Authentifizierungsservers von dem Identifizierungsserver zu dem Identifikationsdokument kann beispielsweise über ein Kommunikationsnetzwerk durchgeführt werden. Das Übertragen des öffentlichen kryptographischen Schlüssels des Authentifizierungsservers kann ferner einen Aufbau sowie ein Schließen einer verschlüsselten und/oder authentisierten Kommunikationsverbindung umfassen.

Der Identifizierungsserver ist ein elD-Server gemäß der Richtlinie BSI TR-03130, wobei die Deaktivierungsanfrage, die Authentifizierungsanfrage und/oder die elektronische Identifikation über ein Kommunikationsnetzwerk, beispielsweise das Internet, übertragen werden. Dadurch wird der Vorteil erreicht, dass der Identifizierungsserver räumlich getrennt von der Sicherheitsanlage und/oder dem Authentifizierungsserver angeordnet sein kann und ein standardisierter Identifizierungsserver eingesetzt werden kann.

Der elD-Server ist gemäß der Richtlinie BSI TR-03130 aufgebaut und kann mit dem Identifikationsdokument und dem Authentifizierungsserver wechselwirken.

Das Kommunikationsnetzwerk kann beispielsweise durch eine Anordnung einer Mehrzahl von Servern, Clients und/oder Computern in Form eines Local Area Network (LAN), eines Wireless Local Area Network (WLAN) oder des Internet gebildet sein.

Das Internet kann ein weltweites Kommunikationsnetzwerk umfassen, welches durch eine Mehrzahl von Teilkommunikationsnetzwerken gebildet sein kann.

Das Übertragen der Deaktivierungsanfrage, der Authentifizierungsanfrage und/oder der elektronischen Identifikation kann ein Aussenden der Deaktivierungsanfrage, der Authentifizierungsanfrage und/oder der elektronischen Identifikation sowie ein Empfangen der Deaktivierungsanfrage, der Authentifizierungsanfrage und/oder der elektronischen Identifikation umfassen. Das Übertragen der Deaktivierungsanfrage, der Authentifizierungsanfrage und/oder der elektronischen Identifikation kann beispielsweise über ein Kommunikationsnetzwerk durchgeführt werden. Das Übertragen der Deaktivierungsanfrage, der Authentifizierungsanfrage und/oder der elektronischen Identifikation kann ferner einen Aufbau sowie ein Schließen einer verschlüsselten und/oder authentisierten Kommunikationsverbindung umfassen.

Gemäß einer Ausführungsform ist der Identifizierungsserver ein lokales Lesegerät, beispielsweise ein Komfortlesegerät. Dadurch wird der Vorteil erreicht, dass der Identifizierungsserver in räumlicher Nähe zu der Sicherheitsanlage und/oder dem Authentifizierungsserver angeordnet sein kann.

Das Lesegerät kann für ein Kommunizieren mit dem Identifikationsdokument ausgebildet sein und beispielsweise gemäß der Richtlinie BSI TR-03119 realisiert sein. Das Lesegerät kann über lokale kryptographische Schlüssel und/oder lokale kryptographische Zertifikate verfügen, welche beispielsweise in einem Sicherheitsmodul des Lesegerätes gespeichert sein können.

Das Komfortlesegerät kann beispielsweise ein Lesegerät mit einer optischen Anzeige und einem Tastatureingabefeld sein.

Die elektronische Identifikation wird durch das Identifikationsdokument durch eine Verknüpfung eines privaten kryptographischen Schlüssels des Identifikationsdokumentes und des öffentlichen kryptographischen Schlüssels des Authentifizierungsservers erzeugt. Dadurch wird der Vorteil erreicht, dass die elektronische Identifikation durch das Identifikationsdokument erzeugt werden kann und die elektronische Identifikation zugleich charakteristisch für das Paar aus Identifikationsdokument und Authentifizierungsserver ist.

Der private kryptographische Schlüssel des Identifikationsdokumentes kann Teil eines kryptographischen Schlüsselpaares sein und gemäß einer Public-Key-Infrastruktur erzeugt worden sein.

Der öffentliche kryptographische Schlüssel des Authentifizierungsservers kann Teil eines kryptographischen Schlüsselpaares sein und gemäß einer Public-Key-Infrastruktur erzeugt worden sein.

Die Verknüpfung des privaten kryptographischen Schlüssels des Identifikationsdokumentes und des öffentlichen kryptographischen Schlüssels des Authentifizierungsservers durch das Identifikationsdokument kann beispielsweise binäre Verknüpfungen, beispielsweise ein Exklusiv-Oder, umfassen. Die Verknüpfung kann ferner durch Anwenden von kryptographischen Algorithmen, wie beispielsweise Advanced Encryption Standard (AES), und/oder durch Anwenden von Algorithmen zur Hashwertbildung, wie beispielsweise Secure Hash Algorithm (SHA), realisiert werden. Die Verknüpfung kann ferner eine Berechnung von Prüfsummen des privaten kryptographischen Schlüssels des Identifikationsdokumentes und/oder des öffentlichen kryptographischen Schlüssels des Authentifizierungsservers umfassen.

Gemäß einer Ausführungsform kann die Verknüpfung als eine Hashfunktion einer Verknüpfung von einem privaten kryptographischen Schlüssel des Identifikationsdokumentes (sk) und einem öffentlichen kryptographischen Schlüssel des Authentifizierungsservers (pk) gebildet werden. Dadurch kann die Restricted Identification gebildet werden. Gemäß einer Ausführungsform kann die Restricted Identification jedoch auch das Ergebnis der Verknüpfung sein.

Gemäß einer Ausführungsform kann die Verknüpfung, beispielsweise als Restricted Identification, auf Grundlage eines Schlüsselaustauschverfahrens, beispielsweise eines Diffie-Hellman (DH) Verfahrens oder eines Elliptic-Curve-Diffie-Hellman (ECDH) Verfahrens, gebildet werden.

Gemäß einer Ausführungsform kann die Verknüpfung, beispielsweise als Restricted Identification, als eine Hashfunktion eines Ergebnisses eines Schlüsselaustauschverfahrens, beispielsweise eines Diffie-Hellman (DH) Verfahrens oder eines Elliptic-Curve-Diffie-Hellman (ECDH) Verfahrens, auf Grundlage von einem privaten kryptographischen Schlüssel des Identifikationsdokumentes (sk) und einem öffentlichen kryptographischen Schlüssel des Authentifizierungsservers (pk) gebildet werden.

Gemäß einer Ausführungsform umfasst das Verfahren: Übertragen des öffentlichen kryptographischen Schlüssels des Authentifizierungsservers zu dem Identifikationsdokument; Erzeugen einer elektronischen Identifikation durch eine Verknüpfung eines privaten kryptographischen Schlüssels des Identifikationsdokumentes und des öffentlichen kryptographischen Schlüssels des Authentifizierungsservers durch das Identifikationsdokument; und Speichern der erzeugten elektronischen Identifikation, um die vorgespeicherte elektronische Identifikation zu erhalten. Dadurch wird der Vorteil erreicht, dass eine vorgespeicherte elektronische Identifikation bereitgestellt werden kann, welche dem Identifikationsdokument zugeordnet ist.

Das Übertragen des öffentlichen kryptographischen Schlüssels des Authentifizierungsservers zu dem Identifikationsdokument kann ein Aussenden des öffentlichen kryptographischen Schlüssels des Authentifizierungsservers sowie ein Empfangen des öffentlichen kryptographischen Schlüssels des Authentifizierungsservers umfassen. Das Übertragen des öffentlichen kryptographischen Schlüssels des Authentifizierungsservers zu dem Identifikationsdokument kann beispielsweise über ein Kommunikationsnetzwerk durchgeführt werden. Das Übertragen des öffentlichen kryptographischen Schlüssels des Authentifizierungsservers kann ferner einen Aufbau sowie ein Schließen einer verschlüsselten und/oder authentisierten Kommunikationsverbindung umfassen.

Das Erzeugen der elektronischen Identifikation durch eine Verknüpfung des privaten kryptographischen Schlüssels des Identifikationsdokumentes und des öffentlichen kryptographischen Schlüssels des Authentifizierungsservers durch das Identifikationsdokument kann ein Bereitstellen der elektronischen Identifikation umfassen. Die Verknüpfung des privaten kryptographischen Schlüssels des Identifikationsdokumentes und des öffentlichen kryptographischen Schlüssels des Authentifizierungsservers durch das Identifikationsdokument kann beispielsweise binäre Verknüpfungen, beispielsweise ein Exklusiv-Oder, umfassen. Die Verknüpfung kann ferner durch Anwenden von kryptographischen Algorithmen, wie beispielsweise Advanced Encryption Standard (AES), und/oder durch Anwenden von Algorithmen zur Hashwertbildung, wie beispielsweise Secure Hash Algorithm (SHA), realisiert werden. Die Verknüpfung kann ferner eine Berechnung von Prüfsummen des privaten kryptographischen Schlüssels des Identifikationsdokumentes und/oder des öffentlichen kryptographischen Schlüssels des Authentifizierungsservers umfassen.

Das Speichern der erzeugten elektronischen Identifikation kann beispielsweise ein Übertragen der erzeugten elektronischen Identifikation zu dem Authentifizierungsserver und ein Ablegen der erzeugten übertragenen elektronischen Identifikation in einen Speicher des Authentifizierungsservers umfassen. Somit kann eine vorgespeicherte elektronische Identifikation bereitgestellt werden.

Gemäß einer Ausführungsform wird das Vergleichen der ausgelesenen elektronischen Identifikation mit der vorgespeicherten elektronischen Identifikation durch den Authentifizierungsserver durchgeführt. Dadurch wird der Vorteil erreicht, dass das Vergleichen der ausgelesenen elektronischen Identifikation mit der vorgespeicherten elektronischen Identifikation an zentraler Stelle durchgeführt werden kann.

Das Vergleichen der ausgelesenen elektronischen Identifikation mit der vorgespeicherten elektronischen Identifikation kann beispielsweise mittels eines Prozessors des Authentifizierungsservers durchgeführt werden. Durch das Vergleichen der ausgelesenen elektronischen Identifikation mit der vorgespeicherten elektronischen Identifikation kann beispielsweise die Übereinstimmung zwischen der ausgelesenen elektronischen Identifikation und der vorgespeicherten elektronischen Identifikation ermittelt werden.

Gemäß einer Ausführungsform wird die ausgelesene elektronische Identifikation mit einer Mehrzahl von vorgespeicherten elektronischen Identifikationen unterschiedlicher Identifikationsdokumente verglichen. Dadurch wird der Vorteil erreicht, dass das Deaktivieren der Sicherheitsanlage durch eine Mehrzahl unterschiedlicher Identifikationsdokumente ermöglicht wird.

Die Mehrzahl von vorgespeicherten elektronischen Identifikationen kann beispielsweise in einem Speicher des Authentifizierungsservers abgespeichert sein.

Das Vergleichen der ausgelesenen elektronischen Identifikation mit der Mehrzahl von vorgespeicherten elektronischen Identifikationen kann ein Anwenden eines Suchalgorithmus, beispielsweise eines linearen Suchalgorithmus, umfassen.

Gemäß einem zweiten Aspekt betrifft die Erfindung ein Sicherheitssystem gemäß Anspruch 6, mit einer deaktivierbaren Sicherheitsanlage und einem Authentifizierungsserver zum Deaktivieren der Sicherheitsanlage unter Verwendung eines elektronisch auslesbaren Identifikationsdokumentes. Dadurch wird der Vorteil erreicht, dass das Verfahren zum Deaktivieren der Sicherheitsanlage effizient ausgeführt werden kann.

Die Kommunikationsschnittstelle kann drahtgebunden oder drahtlos realisiert sein und kann eine Netzwerkschnittstelle umfassen. Die Kommunikationsschnittstelle kann mit einem Kommunikationsnetzwerk verbunden sein.

Der Speicher kann beispielsweise durch eine elektronische Speicherbaugruppe und/oder eine Datenbank realisiert sein. Der Speicher kann mit der Kommunikationsschnittstelle und/oder dem Prozessor verbunden sein.

Der Prozessor kann beispielsweise ein Rechenwerk zum Vergleichen der empfangenen elektronischen Identifikation mit der vorgespeicherten elektronischen Identifikation umfassen. Der Prozessor kann mit der Kommunikationsschnittstelle und/oder dem Speicher verbunden sein. Der Prozessor kann ferner mit der Sicherheitsanlage zum Deaktivieren der Sicherheitsanlage verbunden sein.

Das Verfahren zum Deaktivieren der Sicherheitsanlage kann beispielsweise mittels des Authentifizierungsservers ausgeführt werden.

Weitere Merkmale des Authentifizierungsservers ergeben sich unmittelbar aus der Funktionalität des Verfahrens zum Deaktivieren der Sicherheitsanlage.

Gemäß einer Ausführungsform ist die Kommunikationsschnittstelle ausgebildet, einen öffentlichen kryptographischen Schlüssel des Authentifizierungsservers an einen Identifizierungsserver auszusenden, und, ansprechend hierauf, eine elektronische Identifikation des Identifikationsdokumentes zu empfangen. Dadurch wird der Vorteil erreicht, dass das Auslesen der elektronischen Identifikation aus dem Identifikationsdokument durch den Identifizierungsserver durchgeführt werden kann und somit eine effiziente Implementierung des Authentifizierungsservers ermöglicht wird.

Das Aussenden des öffentlichen kryptographischen Schlüssels des Authentifizierungsservers an den Identifizierungsserver kann beispielsweise über ein Kommunikationsnetzwerk durchgeführt werden.

Das Empfangen der elektronischen Identifikation des Identifikationsdokumentes kann beispielsweise über ein Kommunikationsnetzwerk durchgeführt werden.

Gemäß einer Ausführungsform ist die Kommunikationsschnittstelle ausgebildet, eine elektronische Identifikation des Identifikationsdokumentes zu empfangen, wobei der Speicher ausgebildet ist, die empfangene elektronische Identifikation zu speichern, um die vorgespeicherte elektronische Identifikation zu erhalten. Dadurch wird der Vorteil erreicht, dass die vorgespeicherte elektronische Identifikation effizient bereitgestellt werden kann.

Das Empfangen der elektronischen Identifikation des Identifikationsdokumentes kann beispielsweise über ein Kommunikationsnetzwerk durchgeführt werden.

Das Speichern der empfangenen elektronischen Identifikation in dem Speicher kann ein Ablegen der empfangenen elektronischen Identifikation in dem Speicher umfassen. Somit kann die vorgespeicherte elektronische Identifikation bereitgestellt werden.

Der Prozessor ist ausgebildet, die Sicherheitsanlage bei Übereinstimmung der empfangenen elektronischen Identifikation und der vorgespeicherten elektronischen Identifikation zu deaktivieren. Dadurch wird der Vorteil erreicht, dass die Sicherheitsanlage nur dann deaktiviert wird, wenn die elektronische Identifikation des Identifikationsdokumentes vorgespeichert ist.

Die Übereinstimmung der empfangenen elektronischen Identifikation und der vorgespeicherten elektronischen Identifikation kann beispielsweise dann vorliegen, wenn die empfangene elektronische Identifikation und die vorgespeicherte elektronische Identifikation identisch sind.

Die deaktivierbare Sicherheitsanlage umfasst eine Alarmanlage. Die deaktivierbare Sicherheitsanlage ist dafür vorgesehen, einen Zutritt zu einem Gebäude oder zu einem beschränkten Bereich eines Gebäudes zu ermöglichen oder zu verwehren. Die deaktivierbare Sicherheitsanlage kann mit weiteren Anlagen, beispielsweise Anlagen zur Zeiterfassung, verbunden werden.

Der Authentifizierungsserver wird zum Deaktivieren der deaktivierbaren Sicherheitsanlage unter Verwendung des elektronisch auslesbaren Identifikationsdokumentes eingesetzt.

Der Authentifizierungsserver kann mit der deaktivierbaren Sicherheitsanlage verbunden sein.

Das Verfahren zum Deaktivieren der Sicherheitsanlage kann beispielsweise mittels des Sicherheitssystems ausgeführt werden.

Weitere Merkmale des Sicherheitssystems ergeben sich unmittelbar aus der Funktionalität des Verfahrens zum Deaktivieren der Sicherheitsanlage.

Gemäß einer Ausführungsform umfasst das Sicherheitssystem ferner einen Identifizierungsserver. Dadurch wird der Vorteil erreicht, dass auch ein Auslesen der elektronischen Identifikation aus dem Identifikationsdokument durch das Sicherheitssystem möglich wird.

Der Identifizierungsserver kann beispielsweise ein elD-Server sein und über ein Kommunikationsnetzwerk, beispielsweise das Internet, mit dem Authentifizierungsserver und dem Identifikationsdokument wechselwirken.

Der Identifizierungsserver kann alternativ ein lokales Lesegerät, beispielsweise ein Komfortlesegerät, sein und unmittelbar mit dem Authentifizierungsserver und dem Identifikationsdokument wechselwirken.

Die Erfindung kann in Hardware und/oder in Software realisiert werden.

Weitere Ausführungsbeispiele werden Bezug nehmend auf die beiliegenden Zeichnungen näher erläutert. Es zeigen:
- Fig. 1: ein Ablaufdiagramm eines Verfahrens zum Deaktivieren einer Sicherheitsanlage unter Verwendung eines elektronisch auslesbaren Identifikationsdokumentes;
- Fig. 2: eine schematische Darstellung eines Authentifizierungsservers zum Deaktivieren einer Sicherheitsanlage unter Verwendung eines elektronisch auslesbaren Identifikationsdokumentes;
- Fig. 3: eine schematische Darstellung einer Anordnung zum Deaktivieren einer Sicherheitsanlage unter Verwendung eines elektronisch auslesbaren Identifikationsdokumentes; und
- Fig. 4: eine schematische Darstellung einer Anordnung zum Deaktivieren einer Sicherheitsanlage unter Verwendung eines elektronisch auslesbaren Identifikationsdokumentes.

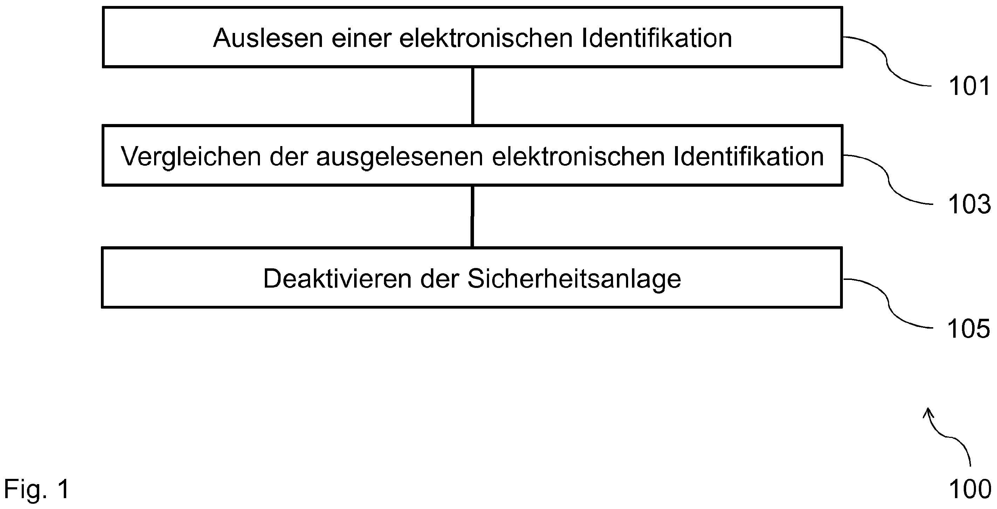

Fig. 1 zeigt ein Ablaufdiagramm eines Verfahrens 100 zum Deaktivieren einer Sicherheitsanlage unter Verwendung eines elektronisch auslesbaren Identifikationsdokumentes.

Das Verfahren 100 umfasst ein Auslesen 101 einer elektronischen Identifikation aus dem Identifikationsdokument, um eine ausgelesene elektronische Identifikation zu erhalten. Das Verfahren 100 umfasst ferner ein Vergleichen 103 der ausgelesenen elektronischen Identifikation mit einer vorgespeicherten elektronischen Identifikation. Das Verfahren 100 umfasst ferner ein Deaktivieren 105 der Sicherheitsanlage bei einer Übereinstimmung zwischen der ausgelesenen elektronischen Identifikation und der vorgespeicherten elektronischen Identifikation.

Das Auslesen 101 der elektronischen Identifikation aus dem Identifikationsdokument kann den Austausch und/oder die Übertragung von kryptographischen Schlüsseln und/oder kryptographischen Zertifikaten umfassen. Ferner kann das Auslesen 101 der elektronischen Identifikation eine Verifikation der Echtheit des Identifikationsdokumentes und/oder der elektronischen Identifikation umfassen. Das Auslesen 101 der elektronischen Identifikation kann beispielsweise mittels eines Lesegerätes, beispielsweise eines Komfortlesegerätes, durchgeführt werden. Das Auslesen 101 der elektronischen Identifikation kann drahtlos und/oder drahtgebunden erfolgen.

Das Vergleichen 103 der ausgelesenen elektronischen Identifikation mit einer vorgespeicherten elektronischen Identifikation kann den Abgleich der ausgelesenen elektronischen Identifikation mit einem Speicher und/oder einer Datenbank umfassen, welche eine Mehrzahl vorgespeicherter elektronischer Identifikationen umfasst.

Die Übereinstimmung zwischen der ausgelesenen elektronischen Identifikation und der vorgespeicherten elektronischen Identifikation kann beispielsweise dann erfüllt sein, wenn die ausgelesene elektronische Identifikation und die vorgespeicherte elektronische Identifikation identisch sind.

Das Deaktivieren 105 der Sicherheitsanlage kann beispielsweise ein Abschalten, ein Entriegeln oder ein Entschärfen der Sicherheitsanlage umfassen.

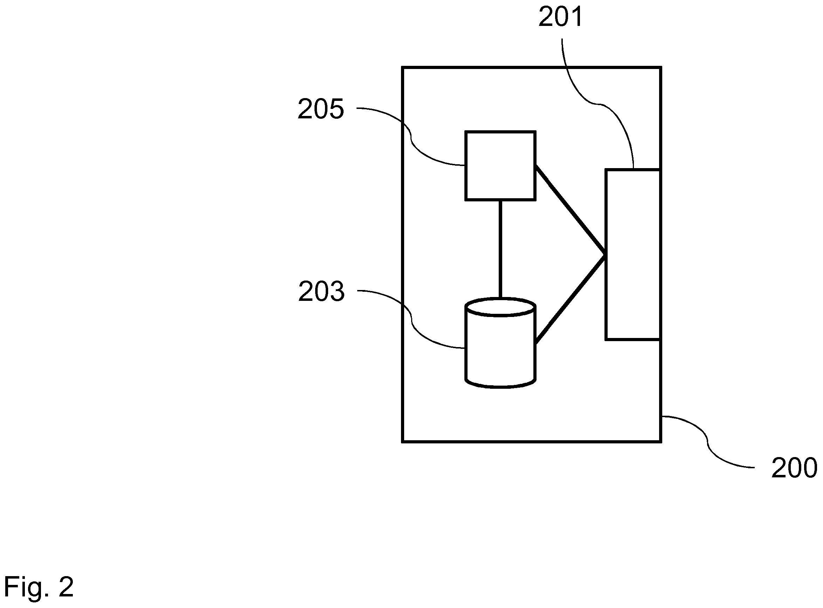

Fig. 2 zeigt eine schematische Darstellung eines Authentifizierungsservers 200 zum Deaktivieren einer Sicherheitsanlage unter Verwendung eines elektronisch auslesbaren Identifikationsdokumentes.

Der Authentifizierungsserver 200 umfasst eine Kommunikationsschnittstelle 201, wobei die Kommunikationsschnittstelle 201 ausgebildet ist, eine Deaktivierungsanfrage zum Deaktivieren der Sicherheitsanlage zu empfangen, ansprechend hierauf, eine Authentifizierungsanfrage zu einem Identifizierungsserver auszusenden, und ansprechend hierauf, eine elektronische Identifikation von dem Identifizierungsserver zu empfangen. Der Authentifizierungsserver 200 umfasst ferner einen Speicher 203, welcher ausgebildet ist, eine vorgespeicherte elektronische Identifikation bereitzustellen. Der Authentifizierungsserver 200 umfasst ferner einen Prozessor 205, welcher ausgebildet ist, die empfangene elektronische Identifikation mit der vorgespeicherten elektronischen Identifikation zu vergleichen, um die Sicherheitsanlage zu deaktivieren.

Die Kommunikationsschnittstelle 201 kann drahtgebunden oder drahtlos realisiert sein und kann eine Netzwerkschnittstelle umfassen. Die Kommunikationsschnittstelle 201 kann mit einem Kommunikationsnetzwerk verbunden sein.

Der Speicher 203 kann beispielsweise durch eine elektronische Speicherbaugruppe und/oder eine Datenbank realisiert sein. Der Speicher 203 kann mit der Kommunikationsschnittstelle 201 und/oder dem Prozessor 205 verbunden sein.

Der Prozessor 205 kann beispielsweise ein Rechenwerk zum Vergleichen der empfangenen elektronischen Identifikation mit der vorgespeicherten elektronischen Identifikation umfassen. Der Prozessor 205 kann mit der Kommunikationsschnittstelle 201 und/oder dem Speicher 203 verbunden sein. Der Prozessor 205 kann ferner mit der Sicherheitsanlage zum Deaktivieren der Sicherheitsanlage verbunden sein.

Das Verfahren 100 zum Deaktivieren der Sicherheitsanlage kann beispielsweise mittels des Authentifizierungsservers 200 ausgeführt werden.

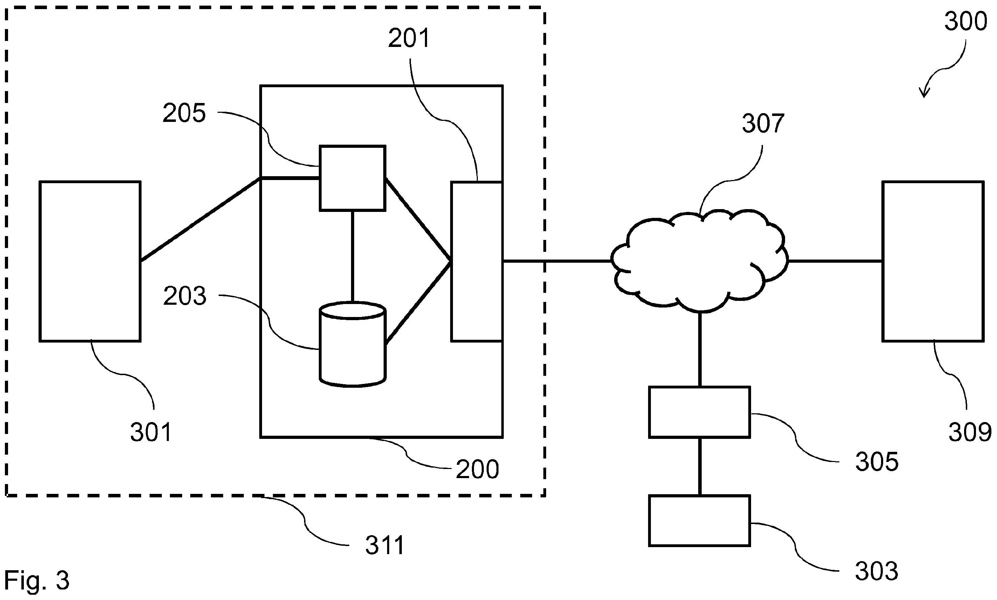

Fig. 3 zeigt eine schematische Darstellung einer Anordnung 300 zum Deaktivieren einer Sicherheitsanlage 301 unter Verwendung eines elektronisch auslesbaren Identifikationsdokumentes 303.

Die Anordnung 300 umfasst einen Authentifizierungsserver 200 mit einer Kommunikationsschnittstelle 201, einem Speicher 203 und einem Prozessor 205. Die Anordnung 300 umfasst ferner eine Sicherheitsanlage 301, ein Identifikationsdokument 303, ein Lesegerät 305, ein Kommunikationsnetzwerk 307 und einen Identifizierungsserver 309. Die Anordnung 300 umfasst ferner ein Sicherheitssystem 311, welches den Authentifizierungsserver 200 und die Sicherheitsanlage 301 umfasst.

Der Authentifizierungsserver 200 kann ausgebildet sein, die Authentifizierungsanfrage zu erzeugen und an den Identifizierungsserver 309 auszusenden. Der Authentifizierungsserver 200 kann ferner ausgebildet sein, die ausgelesene und übertragene elektronische Identifikation mit einer vorgespeicherten elektronischen Identifikation zu vergleichen. Der Authentifizierungsserver 200 kann ferner für eine Verwaltung einer Mehrzahl vorgespeicherter elektronischer Identifikationen unterschiedlicher Identifikationsdokumente 303 ausgebildet sein.

Die Kommunikationsschnittstelle 201 kann drahtgebunden oder drahtlos realisiert sein und kann eine Netzwerkschnittstelle umfassen. Die Kommunikationsschnittstelle 201 ist mit einem Kommunikationsnetzwerk 307 verbunden.

Der Speicher 203 kann beispielsweise durch eine elektronische Speicherbaugruppe und/oder eine Datenbank realisiert sein. Der Speicher 203 kann mit der Kommunikationsschnittstelle 201 und/oder dem Prozessor 205 verbunden sein.

Der Prozessor 205 kann beispielsweise ein Rechenwerk zum Vergleichen der empfangenen elektronischen Identifikation mit der vorgespeicherten elektronischen Identifikation umfassen. Der Prozessor 205 kann mit der Kommunikationsschnittstelle 201 und/oder dem Speicher 203 verbunden sein. Der Prozessor 205 kann ferner mit der Sicherheitsanlage 301 zum Deaktivieren der Sicherheitsanlage 301 verbunden sein.

Die Sicherheitsanlage 301 ist eine Alarmanlage.

Die Sicherheitsanlage 301 ist dafür vorgesehen, einen Zutritt zu einem Gebäude oder zu einem beschränkten Bereich eines Gebäudes zu ermöglichen oder zu verwehren. Die Sicherheitsanlage 301 kann mit weiteren Anlagen, beispielsweise Anlagen zur Zeiterfassung, verbunden werden.

Das Identifikationsdokument 303 kann beispielsweise eines der folgenden Identifikationsdokumente 303 sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 303 kann ferner einen elektronisch auslesbaren Schaltkreis, beispielsweise einen RFID-Chip umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Lesegerät 305 kann für ein Kommunizieren mit dem Identifikationsdokument 303 ausgebildet sein und beispielsweise gemäß der Richtlinie BSI TR-03119 realisiert sein.

Das Lesegerät 305 kann über lokale kryptographische Schlüssel und/oder lokale kryptographische Zertifikate verfügen, welche beispielsweise in einem Sicherheitsmodul des Lesegerätes 305 gespeichert sein können. Das Lesegerät 305 kann beispielsweise ein Komfortlesegerät sein, welches eine optische Anzeige und ein Tastatureingabefeld umfasst.

Das Kommunikationsnetzwerk 307 kann beispielsweise durch eine Anordnung einer Mehrzahl von Servern, Clients und/oder Computern in Form eines Local Area Network (LAN), eines Wireless Local Area Network (WLAN) oder des Internet gebildet sein. Das Internet kann ein weltweites Kommunikationsnetzwerk umfassen, welches durch eine Mehrzahl von Teilkommunikationsnetzwerken gebildet sein kann.

Der Identifizierungsserver 309 ist ausgebildet, die elektronische Identifikation aus dem Identifikationsdokument 303 auszulesen und an den Authentifizierungsserver 200 zu übertragen. Der Identifizierungsserver 309 kann ferner ausgebildet sein, die Echtheit des Identifikationsdokumentes 303 zu verifizieren. Der Identifizierungsserver 309 kann beispielsweise ein elD-Server bzw. ein elektronischer Identifizierungsserver sein.

Das Sicherheitssystem 311 umfasst den Authentifizierungsserver 200 und die Sicherheitsanlage 301.

Das Verfahren 100 zum Deaktivieren 105 der Sicherheitsanlage 301 kann beispielsweise mittels des Sicherheitssystems 311 ausgeführt werden.

Gemäß einer Ausführungsform umfasst das Sicherheitssystem 311 ferner den Identifizierungsserver 309.

Gemäß einer Ausführungsform erfolgt das Deaktivieren der Sicherheitsanlage 301 folgendermaßen. Eine Person legt das Identifikationsdokument 303 auf das Lesegerät 305 oder steckt das Identifikationsdokument 303 in das Lesegerät 305. Das Lesegerät 305 erzeugt eine Deaktivierungsanfrage zum Deaktivieren der Sicherheitsanlage 301 und überträgt die Deaktivierungsanfrage über das Kommunikationsnetzwerk 307 zu dem Authentifizierungsserver 200. Der Authentifizierungsserver 200 überträgt daraufhin über das Kommunikationsnetzwerk 307 eine Authentifizierungsanfrage an den Identifizierungsserver 309. Der Identifizierungsserver 309 liest daraufhin die elektronische Identifikation des Identifikationsdokumentes 303 über das Kommunikationsnetzwerk 307 und das Lesegerät 305 aus. Daraufhin überträgt der Identifizierungsserver 309 die elektronische Identifikation des Identifikationsdokumentes 303 über das Kommunikationsnetzwerk 307 zu dem Authentifizierungsserver 200. Der Authentifizierungsserver 200 vergleicht die übertragene elektronische Identifikation mit einer vorgespeicherten elektronischen Identifikation. Bei einer Übereinstimmung zwischen der übertragenen elektronischen Identifikation und der vorgespeicherten elektronischen Identifikation deaktiviert der Authentifizierungsserver 200 die Sicherheitsanlage 301.

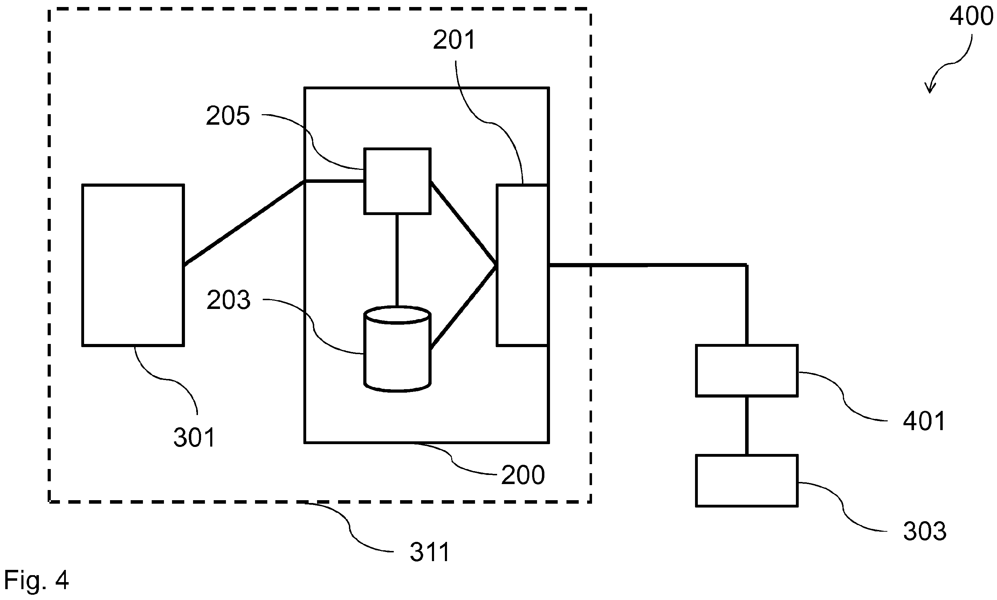

Fig. 4 zeigt eine schematische Darstellung einer Anordnung 400 zum Deaktivieren einer Sicherheitsanlage 301 unter Verwendung eines elektronisch auslesbaren Identifikationsdokumentes 303.

Die Anordnung 400 umfasst einen Authentifizierungsserver 200 mit einer Kommunikationsschnittstelle 201, einem Speicher 203 und einem Prozessor 205. Die Anordnung 400 umfasst ferner eine Sicherheitsanlage 301, ein Identifikationsdokument 303 und ein Lesegerät 401 mit Identifizierungsserver. Die Anordnung 400 umfasst ferner ein Sicherheitssystem 311, welches den Authentifizierungsserver 200 und die Sicherheitsanlage 301 umfasst.

Der Authentifizierungsserver 200 kann ausgebildet sein, die Authentifizierungsanfrage zu erzeugen und an den Identifizierungsserver des Lesegerätes 401 auszusenden. Der Authentifizierungsserver 200 kann ferner ausgebildet sein, die ausgelesene und übertragene elektronische Identifikation mit einer vorgespeicherten elektronischen Identifikation zu vergleichen. Der Authentifizierungsserver 200 kann ferner für eine Verwaltung einer Mehrzahl vorgespeicherter elektronischer Identifikationen unterschiedlicher Identifikationsdokumente 303 ausgebildet sein.

Die Kommunikationsschnittstelle 201 kann drahtgebunden oder drahtlos realisiert sein und kann eine Netzwerkschnittstelle umfassen. Die Kommunikationsschnittstelle 201 ist mit einem Kommunikationsnetzwerk 307 verbunden.

Der Speicher 203 kann beispielsweise durch eine elektronische Speicherbaugruppe und/oder eine Datenbank realisiert sein. Der Speicher 203 kann mit der Kommunikationsschnittstelle 201 und/oder dem Prozessor 205 verbunden sein.

Der Prozessor 205 kann beispielsweise ein Rechenwerk zum Vergleichen der empfangenen elektronischen Identifikation mit der vorgespeicherten elektronischen Identifikation umfassen. Der Prozessor 205 kann mit der Kommunikationsschnittstelle 201 und/oder dem Speicher 203 verbunden sein. Der Prozessor 205 kann ferner mit der Sicherheitsanlage 301 zum Deaktivieren der Sicherheitsanlage 301 verbunden sein.

Die Sicherheitsanlage 301 ist eine Alarmanlage.

Die Sicherheitsanlage 301 ist dafür vorgesehen, einen Zutritt zu einem Gebäude oder zu einem beschränkten Bereich eines Gebäudes zu ermöglichen oder zu verwehren. Die Sicherheitsanlage 301 kann mit weiteren Anlagen, beispielsweise Anlagen zur Zeiterfassung, verbunden werden.

Das Identifikationsdokument 303 kann beispielsweise eines der folgenden Identifikationsdokumente 303 sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 303 kann ferner einen elektronisch auslesbaren Schaltkreis, beispielsweise einen RFID-Chip umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Sicherheitssystem 311 kann den Authentifizierungsserver 200 und die Sicherheitsanlage 301 umfassen. Das Verfahren 100 zum Deaktivieren 105 der Sicherheitsanlage 301 kann beispielsweise mittels des Sicherheitssystems 311 ausgeführt werden.

Gemäß einer Ausführungsform umfasst das Sicherheitssystem 311 ferner den Identifizierungsserver des Lesegerätes 401.

Das Lesegerät 401 mit Identifizierungsserver kann für ein Kommunizieren mit dem Identifikationsdokument 303 ausgebildet sein und beispielsweise gemäß der Richtlinie BSI TR-03119 realisiert sein. Das Lesegerät 401 mit Identifizierungsserver kann über lokale kryptographische Schlüssel und/oder lokale kryptographische Zertifikate verfügen, welche beispielsweise in einem Sicherheitsmodul des Lesegerätes 401 mit Identifizierungsserver gespeichert sein können. Das Lesegerät 401 mit Identifizierungsserver kann beispielsweise ein Komfortlesegerät sein, welches eine optische Anzeige und ein Tastatureingabefeld umfasst. Das Lesegerät 401 mit Identifizierungsserver kann den Identifizierungsserver umfassen.

Der Identifizierungsserver des Lesegerätes 401 ist ausgebildet, die elektronische Identifikation aus dem Identifikationsdokument 303 auszulesen und an den Authentifizierungsserver 200 zu übertragen. Der Identifizierungsserver des Lesegerätes 401 kann ferner ausgebildet sein, die Echtheit des Identifikationsdokumentes 303 zu verifizieren. Der Identifizierungsserver des Lesegerätes 401 kann beispielsweise ein lokaler eID-Server bzw. ein lokaler elektronischer Identifizierungsserver sein.

Gemäß einer Ausführungsform weist der Identifizierungsserver des Lesegerätes 401 dieselbe Funktionalität wie der Identifizierungsserver 309 aus Fig. 3 auf.

Gemäß einer Ausführungsform erfolgt das Deaktivieren der Sicherheitsanlage 301 folgendermaßen. Eine Person legt das Identifikationsdokument 303 auf das Lesegerät 401 mit Identifizierungsserver oder steckt das Identifikationsdokument 303 in das Lesegerät 401 mit Identifizierungsserver. Das Lesegerät 401 mit Identifizierungsserver erzeugt eine Deaktivierungsanfrage zum Deaktivieren der Sicherheitsanlage 301 und überträgt die Deaktivierungsanfrage zu dem Authentifizierungsserver 200. Der Authentifizierungsserver 200 überträgt daraufhin eine Authentifizierungsanfrage an den Identifizierungsserver des Lesegerätes 401. Der Identifizierungsserver des Lesegerätes 401 liest daraufhin die elektronische Identifikation des Identifikationsdokumentes 303 aus. Daraufhin überträgt der Identifizierungsserver des Lesegerätes 401 die elektronische Identifikation des Identifikationsdokumentes 303 zu dem Authentifizierungsserver 200.

Der Authentifizierungsserver 200 vergleicht die übertragene elektronische Identifikation mit einer vorgespeicherten elektronischen Identifikation. Bei einer Übereinstimmung zwischen der übertragenen elektronischen Identifikation und der vorgespeicherten elektronischen Identifikation deaktiviert der Authentifizierungsserver 200 die Sicherheitsanlage 301.

Gemäß einer Ausführungsform betrifft die Erfindung ein Verfahren zum Deaktivieren einer Sicherheitsanlage, beispielsweise einer Alarmanlage und/oder eines Zugangssystems, unter Verwendung eines Identifikationsdokumentes, beispielsweise eines neuen Personalausweises (nPA).

Gemäß einer Ausführungsform ermöglicht die Erfindung ein Deaktivieren einer Sicherheitsanlage, beispielsweise eines Zugangssystems, mit starker Authentifizierung einer Person durch Verwendung eines Identifikationsdokumentes, beispielsweise eines neuen Personalausweises.

Gemäß einer Ausführungsform wird die Berechtigung zum Deaktivieren einer Sicherheitsanlage oder eine Zugangsberechtigung für ein Zugangssystem an einen elektronischen Identitätsnachweis einer Person mittels eines Identifikationsdokumentes, beispielsweise eines neuen Personalausweises, gebunden.

Gemäß einer Ausführungsform wird das Zugangssystem zunächst mit Identitätsinformationen aus dem Identifikationsdokument, beispielsweise dem neuen Personalausweis (nPA), initialisiert. Hierfür kann beispielsweise die Restricted Identification (rID) oder eingeschränkte Wiedererkennung des Identifikationsdokumentes eingesetzt werden. Auch weitere Angaben oder Informationen, wie beispielsweise ein Name oder ein Vorname, können verwendet werden.

Gemäß einer Ausführungsform wird das Zugangssystem mit weiteren Hintergrundsystemen, beispielsweise einem Zeiterfassungssystem, verknüpft.

Gemäß einer Ausführungsform werden die Restricted Identification (rlD) und/oder weitere Identitätsinformationen in einem Speicher oder einer Datenbank des Zugangssystems gespeichert.

Gemäß einer Ausführungsform wird der Zugang zu dem Zugangssystem einem Inhaber eines Identifikationsdokumentes, beispielsweise eines neuen Personalausweises, gewährt, wenn dieser erfolgreich seine Identitätsinformationen nachweisen kann.

Gemäß einer Ausführungsform steckt der Inhaber des Identifikationsdokumentes das Identifikationsdokument, beispielsweise den neuen Personalausweis (nPA), in ein Lesegerät und gibt das Identifikationsdokument, beispielsweise den neuen Personalausweis (nPA), mit einer persönlichen Identifikationsnummer (PIN), beispielsweise einer eID-PIN, frei.

Gemäß einer Ausführungsform erfolgt ein Abgleich der Identitätsinformationen mit den in dem Speicher oder der Datenbank gespeicherten Identitätsinformationen. Anschließend wird eine Alarmanlage deaktiviert

Gemäß einer Ausführungsform werden die Berechtigungsinformationen, beispielsweise ein Terminalzertifikat und/oder ein Terminalschlüssel, durch einen elD-Service nachgewiesen. In diesem Fall kann das Terminal des Zugangssystems als sicherer Kartenleser mit Eingabe einer persönlichen Identifikationsnummer (PIN) mit einer eCard-Programmierschnittstelle oder einer eCard-API fungieren.

Gemäß einer Ausführungsform wird das Terminal als verteiltes Terminal, beispielsweise gemäß der Richtlinie BSI TR-03112, realisiert. Bei dem verteilten Terminal kann das lokale Terminal beispielsweise Nutzereingaben und Nutzerausgaben realisieren. Dabei können die kryptographischen Schlüssel in einem entfernten Modul gespeichert sein. Dadurch kann ein Einsatz einer schmaleren Programmierschnittstelle als die eCard-Programmierschnittstelle oder eCard-API ermöglicht werden.

Gemäß einer Ausführungsform werden die kryptographischen Schlüssel, beispielsweise Terminalschlüssel, in einem lokalen Terminal gespeichert. Das Terminal kann hierfür über ein entsprechendes Sicherheitsmodul verfügen. Die Terminalberechtigungen können in diesem Fall beispielsweise über ein Baugruppenzertifikat nachgewiesen werden. Dies kann ähnlich erfolgen, wie beispielsweise bei baugruppengleichen Lesegeräten oder Komfortlesegeräten derselbe Terminalschlüssel gespeichert ist.

Gemäß einer Ausführungsform funktioniert der vorgenannte Ansatz auch offline, d.h. ohne eine Kommunikationsverbindung oder Netzwerkverbindung des lokalen Nutzerterminals zu der Stelle, an der die kryptographischen Schlüssel gespeichert sind.

Gemäß einer Ausführungsform wird das Terminal durch ein Lesegerät, beispielsweise ein Komfortlesegerät, realisiert.

Gemäß einer Ausführungsform ermöglicht die Erfindung eine Nutzung einer starken Zwei-Faktor-Authentisierung einer Person.

Gemäß einer Ausführungsform ermöglicht die Erfindung eine Anbindung oder Verbindung mit Hintergrundsystemen, beispielsweise Zeiterfassungssystemen.

Gemäß einer Ausführungsform ermöglicht die Erfindung eine Nutzung eines breit verfügbaren Identifizierungs-Tokens bzw. ID-Tokens.

Gemäß einer Ausführungsform ermöglicht die Erfindung eine Nutzung einer Restricted Identification (rlD) zur Datensparsamkeit und zur Vermeidung von Challenge Semantics.

Gemäß einer Ausführungsform verwendet die Erfindung ein starkes Identifikations-Token oder ID-Token durch Kombination von Besitz und Wissen. Der Besitz kann beispielsweise das Vorliegen eines Identifikationsdokumentes umfassen. Das Wissen kann beispielsweise die Kenntnis einer persönlichen Identifikationsnummer (PIN) umfassen.

Gemäß einer Ausführungsform basiert die Erfindung auf einer Nutzung von Baugruppenzertifikaten.

### BEZUGSZEICHENLISTE

- 100: Verfahren zum Deaktivieren einer Sicherheitsanlage
- 101: Auslesen einer elektronischen Identifikation
- 103: Vergleichen der ausgelesenen elektronischen Identifikation
- 105: Deaktivieren der Sicherheitsanlage

- 200: Authentifizierungsserver
- 201: Kommunikationsschnittstelle
- 203: Speicher
- 205: Prozessor

- 300: Anordnung zum Deaktivieren einer Sicherheitsanlage
- 301: Sicherheitsanlage
- 303: Identifikationsdokument
- 305: Lesegerät
- 307: Kommunikationsnetzwerk
- 309: Identifizierungsserver
- 311: Sicherheitssystem

- 400: Anordnung zum Deaktivieren einer Sicherheitsanlage
- 401: Lesegerät mit Identifizierungsserver

## Patentansprüche

1. Verfahren (100) zum Deaktivieren einer Sicherheitsanlage (301) unter Verwendung eines elektronisch auslesbaren Identifikationsdokumentes (303), mit:
Auslesen (101) einer elektronischen Identifikation aus dem Identifikationsdokument (303), um eine ausgelesene elektronische Identifikation zu erhalten;
Vergleichen (103) der ausgelesenen elektronischen Identifikation mit einer vorgespeicherten elektronischen Identifikation; und
Deaktivieren (105) der Sicherheitsanlage (301) bei einer Übereinstimmung zwischen der ausgelesenen elektronischen Identifikation und der vorgespeicherten elektronischen Identifikation,
wobei die elektronische Identifikation die Restricted Identification des Identifikationsdokumentes (303) ist oder zumindest ein Personendatum einer durch das elektronisch auslesbare Identifikationsdokument identifizierten Person umfasst, wobei das Personendatum ein Name oder eine Adresse ist, wobei
das Auslesen (101) der elektronischen Identifikation aus dem Identifikationsdokument (303) die folgenden Schritte umfasst:
Übertragen einer Deaktivierungsanfrage zur Deaktivierung (105) der Sicherheitsanlage (301) zu einem Authentifizierungsserver (200);
Ansprechend auf den Empfang der Deaktivierungsanfrage, Übertragen einer Authentifizierungsanfrage von dem Authentifizierungsserver (200) zu einem Identifizierungsserver (309);
Ansprechend auf den Empfang der Authentifizierungsanfrage, Auslesen (101) der elektronischen Identifikation aus dem Identifikationsdokument (303) durch den Identifizierungsserver (309); und
Übertragen der elektronischen Identifikation von dem Identifizierungsserver (309) zu dem Authentifizierungsserver (200),
wobei der Identifizierungsserver (309) ein eID-Server gemäß der Richtlinie BSI TR-03130 ist, und wobei die Deaktivierungsanfrage, die Authentifizierungsanfrage oder die elektronische Identifikation über ein Kommunikationsnetzwerk (307), insbesondere das Internet, übertragen werden, wobei
die "restricted identification" sich aus einer kryptografischen Verknüpfung zwischen einem privaten kryptografischen Schlüssel des Identifikationsdokumentes und eines öffentlichen kryptografischen Schlüssels des Authentifizierungsservers bzw. einem auf dieser Basis gebildeten Hashwert, gegebenenfalls unter Hinzuziehung eines weiteren kryptografischen Schlüssels ergibt,
wobei die Sicherheitsanlage (301) eine Alarmanlage umfasst, und wobei das Deaktivieren (105) der Sicherheitsanlage (301) ein Deaktivieren der Alarmanlage umfasst,
wobei die Sicherheitsanlage (301) dafür vorgesehen ist, einen Zutritt zu einem Gebäude oder zu einem beschränkten Bereich eines Gebäudes zu ermöglichen oder zu verwehren,
wobei die Alarmanlage einen unbefugten Zutritt zu dem Gebäude oder zu dem beschränkten Bereich des Gebäudes anzeigen kann, wobei das Deaktivieren der Alarmanlage ein Entschärfen der Alarmanlage umfasst.

2. Verfahren (100) nach Anspruch 1, mit:
Übertragen des öffentlichen kryptographischen Schlüssels des Authentifizierungsservers (200) zu dem Identifizierungsserver (309) oder Auslesen des öffentlichen kryptographischen Schlüssels des Authentifizierungsservers (200) aus einem Speicher des Identifizierungsservers (309); und
Übertragen des öffentlichen kryptographischen Schlüssels des Authentifizierungsservers (200) von dem Identifizierungsserver (309) zu dem Identifikationsdokument (303).

3. Verfahren (100) nach einem der Ansprüche 1 bis 2, wobei die elektronische Identifikation durch das Identifikationsdokument (303) durch eine Verknüpfung eines privaten kryptographischen Schlüssels des Identifikationsdokumentes (303) und des öffentlichen kryptographischen Schlüssels des Authentifizierungsservers (200) erzeugt wird.

4. Verfahren (100) nach einem der Ansprüche 1 bis 3, mit:
Übertragen des öffentlichen kryptographischen Schlüssels des Authentifizierungsservers (200) zu dem Identifikationsdokument (303);
Erzeugen einer elektronischen Identifikation durch eine Verknüpfung eines privaten kryptographischen Schlüssels des Identifikationsdokumentes (303) und des öffentlichen kryptographischen Schlüssels des Authentifizierungsservers (200) durch das Identifikationsdokument (303); und
Speichern der erzeugten elektronischen Identifikation, um die vorgespeicherte elektronische Identifikation zu erhalten.

5. Verfahren (100) nach einem der Ansprüche 1 bis 4, wobei das Vergleichen (103) der ausgelesenen elektronischen Identifikation mit der vorgespeicherten elektronischen Identifikation durch den Authentifizierungsserver (200) durchgeführt wird.

6. Sicherheitssystem (311), mit:
einer deaktivierbaren Sicherheitsanlage (301); und
einem Authentifizierungsserver (200) zum Deaktivieren (105) der Sicherheitsanlage (301) unter Verwendung eines elektronisch auslesbaren Identifikationsdokumentes (303), mit:
einer Kommunikationsschnittstelle (201), wobei die Kommunikationsschnittstelle (201) ausgebildet ist, eine Deaktivierungsanfrage zum Deaktivieren (105) der Sicherheitsanlage (301) zu empfangen, ansprechend hierauf, eine Authentifizierungsanfrage zu einem Identifizierungsserver (309) auszusenden, und ansprechend hierauf, eine elektronische Identifikation von dem Identifizierungsserver (309) zu empfangen;
einem Speicher (203), welcher ausgebildet ist, eine vorgespeicherte elektronische Identifikation bereitzustellen; und
einem Prozessor (205), welcher ausgebildet ist, die empfangene elektronische Identifikation mit der vorgespeicherten elektronischen Identifikation zu vergleichen, um die Sicherheitsanlage (301) zu deaktivieren,
wobei die elektronische Identifikation die Restricted Identification des Identifikationsdokumentes (303) ist oder zumindest ein Personendatum einer durch das elektronisch auslesbare Identifikationsdokument identifizierten Person umfasst, wobei das Personendatum ein Name oder eine Adresse ist,
wobei der Identifizierungsserver (309) ein eID-Server gemäß der Richtlinie BSI TR-03130 ist, und wobei die Deaktivierungsanfrage, die Authentifizierungsanfrage oder die elektronische Identifikation über ein Kommunikationsnetzwerk (307), insbesondere das Internet, übertragen werden, wobei
die "restricted identification" sich aus einer kryptografischen Verknüpfung zwischen einem privaten kryptografischen Schlüssel des Identifikationsdokumentes und eines öffentlichen kryptografischen Schlüssels des Authentifizierungsservers bzw. einem auf dieser Basis gebildeten Hashwert, gegebenenfalls unter Hinzuziehung eines weiteren kryptografischen Schlüssels ergibt,
wobei der Prozessor (205) ausgebildet ist, die Sicherheitsanlage (301) bei Übereinstimmung der empfangenen elektronischen Identifikation und der vorgespeicherten elektronischen Identifikation zu deaktivieren,
wobei die Sicherheitsanlage (301) eine Alarmanlage umfasst, und wobei das Deaktivieren der Sicherheitsanlage (301) ein Deaktivieren der Alarmanlage umfasst;
wobei die Sicherheitsanlage (301) dafür vorgesehen ist, einen Zutritt zu einem Gebäude oder zu einem beschränkten Bereich eines Gebäudes zu ermöglichen oder zu verwehren,
wobei die Alarmanlage einen unbefugten Zutritt zu dem Gebäude oder zu dem beschränkten Bereich des Gebäudes anzeigen kann, wobei das Deaktivieren der Alarmanlage ein Entschärfen der Alarmanlage umfasst.

7. Sicherheitssystem (301) nach Anspruch 6, wobei die Kommunikationsschnittstelle (201) des Authentifizierungsservers (200) ausgebildet ist, einen öffentlichen kryptographischen Schlüssel des Authentifizierungsservers (200) an einen Identifizierungsserver (309) auszusenden, und, ansprechend hierauf, eine elektronische Identifikation des Identifikationsdokumentes (303) zu empfangen.

8. Sicherheitssystem (301) nach einem der Ansprüche 6 oder 7, wobei die Kommunikationsschnittstelle (201) des Authentifizierungsservers (200) ausgebildet ist, eine elektronische Identifikation des Identifikationsdokumentes (303) zu empfangen, und wobei der Speicher (203) des Authentifizierungsservers (200) ausgebildet ist, die empfangene elektronische Identifikation zu speichern, um die vorgespeicherte elektronische Identifikation zu erhalten.

9. Sicherheitssystem (311) nach einem der Ansprüche 6 bis 8, welches ferner einen Identifizierungsserver (309) umfasst.

## Claims

1. Method (100) for deactivating a security system (301) using an electronically readable identification document (303), the method (100) comprising:
reading (101) an electronic identification from the identification document (303) in order to obtain a read electronic identification;
comparing (103) the read electronic identification with a pre-stored electronic identification; and
deactivating (105) the security system (301) when the read electronic identification matches the pre-stored electronic identification,
wherein the electronic identification is the restricted identification of the identification document (303) or at least comprises personal data of a person identified by the electronically readable identification document, wherein the personal data is a name or an address, wherein the reading (101) of the electronic identification from the identification document (303) comprises the following steps:
transmitting a deactivation request for deactivating (105) the security system (301) to an authentication server (200);
in response to the receiving of the deactivation request, transmitting an authentication request from the authentication server (200) to an identification server (309);
in response to the receiving of the authentication request, reading (101) the electronic identification from the identification document (303) by the identification server (309); and
transmitting the electronic identification from the identification server (309) to the authentication server (200),
where the identification server (309) is an elD server according to the guideline BSI TR-03130, and where the deactivation request, the authentication request, or the electronic identification is transmitted via a communications network (307), in particular the Internet, wherein
the "restricted identification" results from a cryptographic link between a private cryptographic key of the identification document and a public cryptographic key of the authentication server, or, respectively, a hash value formed on this basis, possibly by using another cryptographic key,
wherein the security system (301) comprises an alarm system, and wherein the deactivating (105) of the security system (301) comprises deactivating the alarm system,
wherein the security system (301) is adapted to enable or prevent an access to a building or to a restricted area of a building,
wherein the alarm system can indicate an unauthorized access to the building or to the restricted area of the building, wherein the deactivating of the alarm system comprises disarming the alarm system.

2. Method (100) according to claim 1, comprising:
transmitting the public cryptographic key of the authentication server (200) to the identification server (309) or reading the public cryptographic key of the authentication server (200) from a memory of the identification server (309); and
transmitting the public cryptographic key of the authentication server (200) from the identification server (309) to the identification document (303).

3. Method (100) according to one of claims 1 to 2, wherein the electronic identification is generated by the identification document (303) by linking a private cryptographic key of the identification document (303) and the public cryptographic key of the authentication server (200).

4. Method (100) according to any one of claims 1 to 3, comprising:
transmitting the public cryptographic key of the authentication server (200) to the identification document (303);
generating an electronic identification by linking a private cryptographic key of the identification document (303) and the public cryptographic key of the authentication server (200) by the identification document (303); and
storing the generated electronic identification in order to obtain the pre-stored electronic identification.

5. Method (100) according to one of claims 1 to 4, wherein the comparing (103) of the read electronic identification with the prestored electronic identification is carried out by the authentication server (200).

6. Security system (311), comprising:
a deactivatable security system (301); and
an authentication server (200) for deactivating (105) the security system (301) using an electronically readable identification document (303), the authentication server (200) comprising:
a communication interface (201), wherein the communication interface (201) is configured to receive a deactivation request for deactivating (105) the security system (301), in response thereto to send an authentication request to an identification server (309), and in response thereto to receive an electronic identification from the identification server (309);
a memory (203), which is configured to provide a pre-stored electronic identification; and
a processor (205), which is configured to compare the received electronic identification with the pre-stored electronic identification in order to deactivate the security system (301),
wherein the electronic identification is the restricted identification of the identification document (303) or at least comprises personal data of a person identified by the electronically readable identification document, wherein the personal data is a name or an address,
wherein the identification server (309) is an elD server according to the guideline BSI TR-03130, and where the deactivation request, the authentication request, or the electronic identification is transmitted via a communications network (307), in particular the Internet, wherein
the "restricted identification" results from a cryptographic link between a private cryptographic key of the identification document and a public cryptographic key of the authentication server, or, respectively, a hash value formed on this basis, possibly by using another cryptographic key,
wherein the processor (205) is configured to deactivate the security system (301) when the received electronic identification matches the pre-stored electronic identification,
wherein the security system (301) comprises an alarm system, and wherein the deactivating of the security system (301) comprises deactivating the alarm system;
wherein the security system (301) is adapted to enable or prevent an access to a building or to a restricted area of a building,
wherein the alarm system is configured to indicate an unauthorized access to the building or to the restricted area of the building, wherein the deactivating of the alarm system comprises disarming the alarm system.

7. Security system (301) according to claim 6, wherein the communication interface (201) of the authentication server (200) is configured to send out a public cryptographic key of the authentication server (200) to an identification server (309) and, in response thereto, to receive an electronic identification of the identification document (303).

8. Security system (301) according to one of claims 6 or 7, wherein the communication interface (201) of the authentication server (200) is configured to receive an electronic identification of the identification document (303), and wherein the memory (203) of the authentication server (200) is configured to store the received electronic identification in order to obtain the pre-stored electronic identification.

9. Security system (311) according to one of claims 6 to 8, which further comprises an identification server (309).

## Revendications

1. Procédé (100) de désactivation d'un système de sécurité (301) au moyen d'un document d'identification lisible électroniquement (303), le procédé (100) comprenant :
lecture (101) d'une identification électronique à partir du document d'identification (303) afin d'obtenir une identification électronique lue ;
comparer (103) l'identification électronique lue avec une identification électronique préenregistrée ; et
désactivation (105) du système de sécurité (301) lorsque l'identification électronique lue et l'identification électronique préenregistrée correspondent,
dans lequel l'identification électronique est l'identification restreinte du document d'identification (303) ou comprend au moins des données personnelles d'une personne identifiée par le document d'identification lisible électroniquement, les données personnelles étant un nom ou une adresse, la lecture (101) de l'identification électronique à partir du document d'identification (303) comprenant les étapes suivantes :
transmission d'une demande de désactivation pour désactiver (105) le système de sécurité (301) à un serveur d'authentification (200) ;
en réponse à la réception de la demande de désactivation, transmission d'une demande d'authentification du serveur d'authentification (200) à un serveur d'identification (309) ;
en réponse à la réception de la demande d'authentification, en lisant (101) l'identification électronique à partir du document d'identification (303) par le serveur d'identification (309) ; et
transmission de l'identification électronique du serveur d'identification (309) au serveur d'authentification (200),
où le serveur d'identification (309) est un serveur d'identification électronique conforme à la directive BSI TR-03130, et où la demande de désactivation, la demande d'authentification ou l'identification électronique est transmise via un réseau de communication (307), notamment Internet, dans lequel
l'« identification restreinte » résulte d'un lien cryptographique entre une clé cryptographique privée du document d'identification et une clé cryptographique publique du serveur d'authentification, ou, respectivement, d'une valeur de hachage formée sur cette base, éventuellement avec l'ajout d'une autre clé cryptographique,
dans lequel le système de sécurité (301) comprend un système d'alarme, et dans lequel la désactivation (105) du système de sécurité (301) comprend la désactivation du système d'alarme,
dans lequel le système de sécurité (301) est adapté pour permettre ou empêcher l'accès à un bâtiment ou à une zone restreinte d'un bâtiment,
dans lequel le système d'alarme peut indiquer un accès non autorisé au bâtiment ou à la zone restreinte du bâtiment, la désactivation du système d'alarme comprenant le désarmement du système d'alarme.

2. Procédé (100) selon la revendication 1, comprenant :
transmission de la clé cryptographique publique du serveur d'authentification (200) au serveur d'identification (309) ou lecture de la clé cryptographique publique du serveur d'authentification (200) à partir de la mémoire du serveur d'identification (309) ; et
transmission de la clé cryptographique publique du serveur d'authentification (200) du serveur d'identification (309) au document d'identification (303).

3. Procédé (100) selon l'une des revendications 1 à 2, dans lequel l'identification électronique est générée par le document d'identification (303) en liant une clé cryptographique privée du document d'identification (303) et la clé cryptographique publique du serveur d'authentification (200).

4. Procédé (100) selon l'une quelconque des revendications 1 à 3, comprenant :
transmission de la clé cryptographique publique du serveur d'authentification (200) au document d'identification (303) ;
générer une identification électronique en liant une clé cryptographique privée du document d'identification (303) et la clé cryptographique publique du serveur d'authentification (200) par le document d'identification (303) ; et
stocker l'identification électronique générée afin d'obtenir l'identification électronique pré-enregistrée.

5. Procédé (100) selon l'une des revendications 1 à 4, dans lequel la comparaison (103) de l'identification électronique lue avec l'identification électronique préenregistrée est effectuée par le serveur d'authentification (200).

6. Système de sécurité (311), comprenant :
un système de sécurité désactivable (301) ; et
un serveur d'authentification (200) pour désactiver (105) le système de sécurité (301) à l'aide d'un document d'identification lisible électroniquement (303), le serveur d'authentification (200) comprenant :
une interface de communication (201), dans laquelle l'interface de communication (201) est configurée pour recevoir une demande de désactivation pour désactiver (105) le système de sécurité (301), y répondre en envoyant une demande d'authentification à un serveur d'identification (309), et y répondre en recevant une identification électronique du serveur d'identification (309) ;
une mémoire (203), configurée pour fournir une identification électronique préenregistrée ; et
un processeur (205), configuré pour comparer l'identification électronique reçue avec l'identification électronique pré-enregistrée afin de désactiver le système de sécurité (301),
dans lequel l'identification électronique est l'identification restreinte du document d'identification (303) ou comprend au moins des données personnelles d'une personne identifiée par le document d'identification lisible électroniquement, les données personnelles étant un nom ou une adresse,
où le serveur d'identification (309) est un serveur d'identification électronique conforme à la directive BSI TR-03130, et où la demande de désactivation, la demande d'authentification ou l'identification électronique est transmise via un réseau de communication (307), notamment Internet, dans lequel
l'« identification restreinte » résulte d'un lien cryptographique entre une clé cryptographique privée du document d'identification et une clé cryptographique publique du serveur d'authentification, ou, respectivement, d'une valeur de hachage formée sur cette base, éventuellement avec l'ajout d'une autre clé cryptographique,
dans lequel le processeur (205) est configuré pour désactiver le système de sécurité (301) lorsque l'identification électronique reçue et l'identification électronique pré-enregistrée correspondent,
dans lequel le système de sécurité (301) comprend un système d'alarme, et dans lequel la désactivation du système de sécurité (301) comprend la désactivation du système d'alarme ;
dans lequel le système de sécurité (301) est adapté pour permettre ou empêcher l'accès à un bâtiment ou à une zone restreinte d'un bâtiment,
dans lequel le système d'alarme peut indiquer un accès non autorisé au bâtiment ou à la zone restreinte du bâtiment, la désactivation du système d'alarme comprenant le désarmement du système d'alarme.

7. Système de sécurité (301) selon la revendication 6, dans lequel l'interface de communication (201) du serveur d'authentification (200) est configurée pour envoyer une clé cryptographique publique du serveur d'authentification (200) à un serveur d'identification (309) et, en réponse à celle-ci, pour recevoir une identification électronique du document d'identification (303).

8. Système de sécurité (301) selon l'une des revendications 6 ou 7, dans lequel l'interface de communication (201) du serveur d'authentification (200) est configurée pour recevoir une identification électronique du document d'identification (303), et dans lequel la mémoire (203) du serveur d'authentification (200) est configurée pour stocker l'identification électronique reçue afin d'obtenir l'identification électronique pré-enregistrée.

9. Système de sécurité (311) selon l'une des revendications 6 à 8, qui comprend en outre un serveur d'identification (309).
